# EUROPEAN PATENT APPLICATION

(11) **EP 0 759 596 A2**
(43) Date of publication of application: **26.02.1997**
(21) Application number: 96113539.9
(22) Date of filing: 23.08.1996
(51) Int. Cl.: G06F 17/60

(54) **Apparatus and method for generating address change notice**

(30) Priority: 23.08.1995 US 518443
(71) Applicant: PITNEY BOWES INC., Stamford Connecticut 06916-0700 (US)
(72) Inventor: Mandulay, Flavio M., Woodbury, Connecticut 06798 (US)
(74) Representative: Avery, Stephen John

(57) **Abstract**

A semi-automatic mail sorting system is provided which includes a database (42) of names and associated mailing addresses in addition to sorting information. When a mail piece is received the addressee's name and associated mailing address are accessed from the database and if the address on the mail piece does not match the address from the database and the return address on the mail piece is scanned into the system the return address and the information retrieved from the database are then merged to form an address change record. Batches of address change records are later output to produce address change notices. Properly addressed mail pieces are sorted in a conventional manner.

## Description

The subject invention relates to an apparatus and method for automatically generating notices to be sent to customer's, vendors, shippers and other mailers advising them that an addressee has a new mailing address. More particularly, it relates to an apparatus and method which are integrated into the sorting process for incoming mail.

Corporations and other large organizations frequently change the assignments of their employees, and with such changes there is typically a change of the employee's mailing address. Generally the employees will not undertake to notify all their correspondents when such an address change takes place. Since such corporations and other organizations will typically have a mail room operation which receives, sorts and delivers incoming mail it would be advantageous if these mail rooms could have a capability to automatically generate address change notifications as miss-addressed mail is received.

It is an object of the subject invention to provide an apparatus and method for creating such a capability.

The above object is achieved and the disadvantages of the prior art are overcome in accordance with the subject invention by means of an apparatus and method which provide a database of names and their associated mailing addresses. Information from a mail piece is input to access the database and retrieve one of the names and associated mailing addresses corresponding to an addressee's name on the mail piece. The address on the mail piece is compared with the retrieved mailing address and, if the mailing address on the mail piece is substantially different from the retrieved mailing address, a return address from the mail piece is input to create an address change record, the address change record including the retrieved name and associated mailing address, and the return address. The address change record is then merged with a predetermined form and the merged record and form are output to generate the address change notice, the notice being addressed with the return address input from the mail piece.

In accordance with one aspect of the subject invention the address change record is stored as a part of a batch of similar such records and the records in the batch are each merged with the predetermined form, and output as a corresponding batch of address change notices.

In accordance with another aspect of the subject invention the apparatus and method of the subject invention include sorting the mail piece for delivery to the addressee.

In accordance with still another aspect of the subject invention the mail piece is a letter.

Thus, those skilled in the art will readily recognize that the subject invention advantageously achieves the above object. Other objects and advantages of the subject invention will be apparent from consideration of the attached drawings and the detailed description set forth below.
- Figure 1: shows a perspective view of a system in accordance with the subject invention.
- Figure 2: shows a schematic block diagram of the apparatus of Figure 1.
- Figures 3A-3D: illustrate the operation of the subject invention in retrieving the correct mailing address for the addressee of a mail piece.
- Figure 4: is a flow diagram of the operation of the subject invention in generating a change of address record.
- Figure 5: illustrates the operation of the subject invention in editing a return address scanned from a mail piece.
- Figures 6A and 6B: are flow diagrams of the operation of the subject invention in creating an address change record and outputting an address change notice.
- Figure 7: shows a predetermined form used for an address notice.

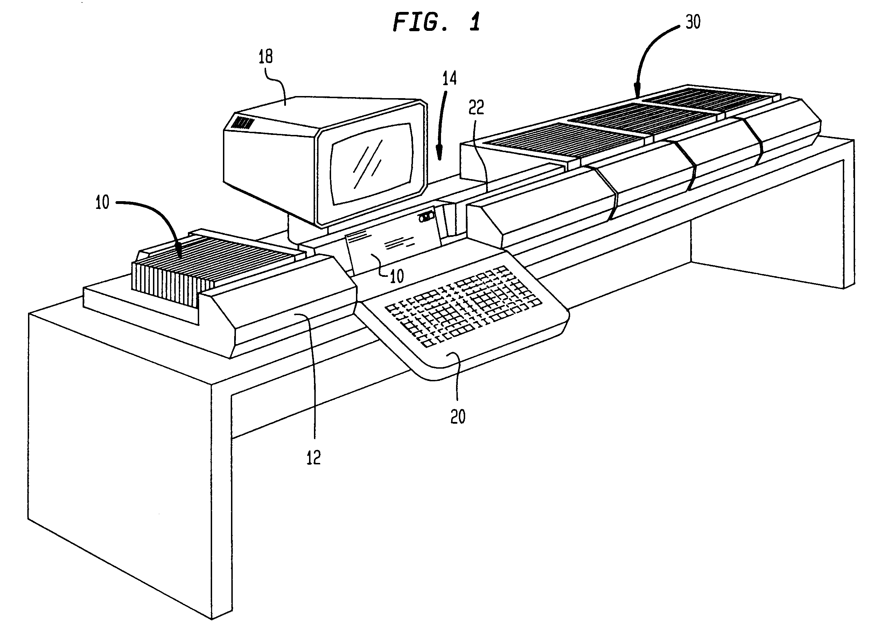

Figure 1 shows a perspective view of an apparatus for sorting incoming mail and for generating address change notices. U.S. patent number 4,921,107 to Hofer, issued May 1, 1990, which teaches a system which is similar but which only has a capability for sorting mail, is hereby incorporated by reference.

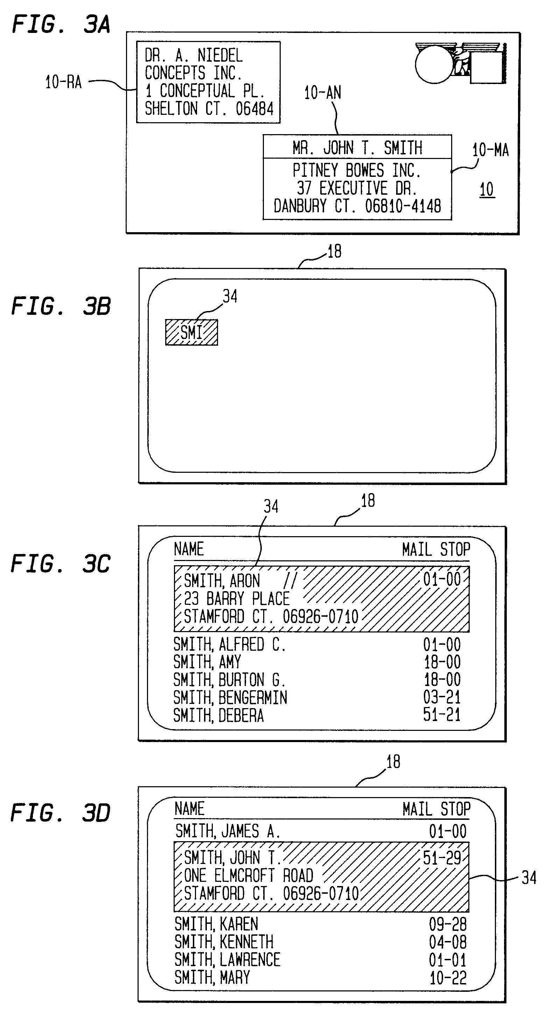

In the apparatus shown in Figure 1, mail pieces 10 are singulated and fed by a conventional feeder 12 to work station 14. Work station 14 includes display 18, controlled by processor 40 (shown in Figure 3) keyboard 20 for input to processor 40 and transport 22. Transport 22 positions a singulated mail piece 10 for convenient viewing by a system operator as will be described further below. The operator then inputs information relating to mail piece 10, processor 40 displays a set of records consistent with that information, the operator selects a record and processor 40 controls sorting system 30 to sort singulated mail piece 10 in accordance with sortation information in the selected record, as is described more fully in the above referenced Hofer patent.

The system of Figure 1 also includes scanner 31 for scanning a return address from mail piece 10 to generate an address change notice, as will be described further below.

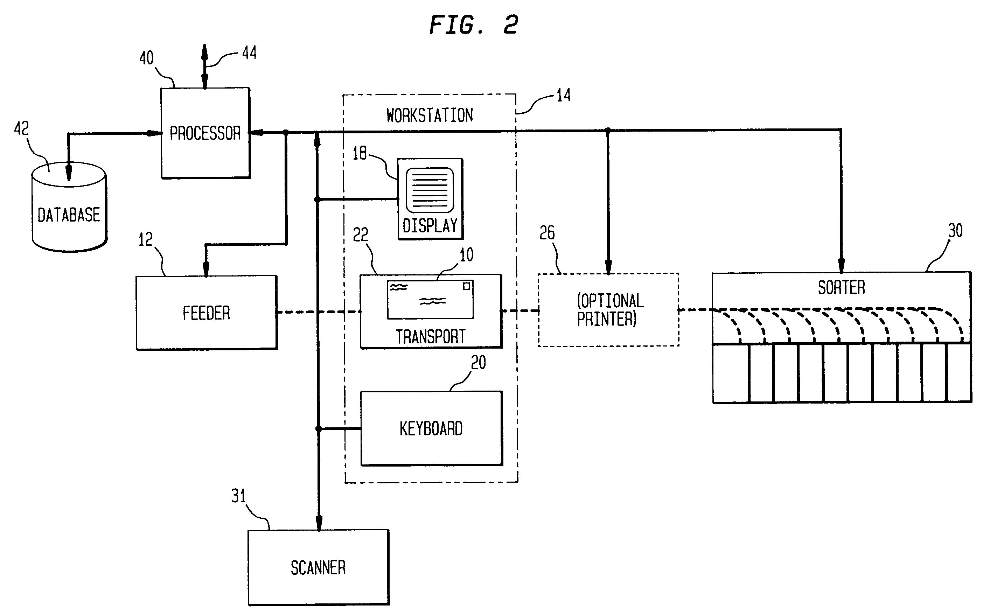

Figure 2 shows a schematic block diagram of the system shown in Figure 1. Conventional feeder 12 feeds a singulated mail piece 10 on transport 22 to work station 14 in response to commands from processor 40. The system operator then uses keyboard 20 to input search characters which are typically the first few letters of the addressee's name on mail piece 10, to processor 40. Processor 40 then uses conventional database management techniques to access database 42 and retrieve the first set of names and associated mailing addresses consistent with the search characters and to display these records on display 18, as will be described further below. The operator then inputs commands through keyboard 20 to locate and select the appropriate name and associated mailing address. When the proper name and associated mailing address are selected, if the displayed mailing address is consistent with the mailing address of mail piece 10, then, in response to an input from the operator, processor 40 then controls transport 22 and sorter 30 to sort mail piece 10 in accordance with sortation information included with the selected name and mailing address, as is described more fully in the above referenced Hofer patent.

If, upon inspection of the displayed mailing address, the operator sees that mail piece 10 is not correctly addressed then the operator uses scanner 31 to scan in the return address on mail piece 10 to initiate generation of an address change notice.

Figures 3A - 3D further illustrate the operation of the above described embodiment of the subject invention. Initially mail piece 10, shown in greater detail in Figure 3A, is positioned on transport 22 for convenient inspection by the operator. Mail piece 10 includes addressee name 10-AN, mailing address 10-MA to which mail piece 10 is to be delivered, and a return address 10-RA. (Mail pieces which lack all or some of the above information and cannot be processed in accordance with the subject invention may be diverted for off-line processing, which need not be described here for an understanding of the subject invention.)

The operator then begins to input the first few letters of the addressee's last name into cursor field 34 on display 18, as shown in Figure 3B. Once a sufficient number of letters have been input processor 40 accesses database 42 to display the first name and associated mailing address consistent with the input information, in cursor field 34 as is shown in Figure 3C.

The operator then compares the addressee name 10-AN and mailing address 10-MA with the name and associated mailing address displayed in cursor field 34. As can be seen in Figures 3A and 3c the first name retrieved by processor 40 from database 42 is not addressee name 10-AN. The operator may then use conventional inputs to move cursor field 34 through the database to find the correct name and mailing address or may input additional letters of addressee name 10-AN to enable processor 40 to identify the correct name and mailing address, as is shown in Figure 3D.

When the correct name, matching addressee name 10-AN, is found it can be seen in Figures 3A and 3D that mailing address 10-MA does not match the correct mailing address for the addressee as shown in Figure 3D. In this case the operator will use scanner 31 to scan in a digital image of return address 10-RA from mail piece 10 and initiate generation of a change of address notice.

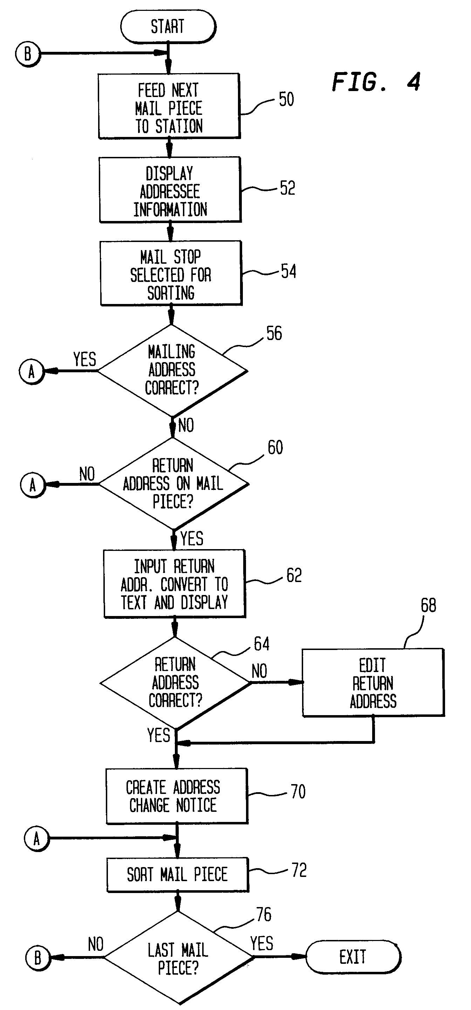

Turning to Figure 4 a flow diagram of the above described preferred embodiments of the subject invention is shown. At 50 processor 40 controls feeder 12 to feed singulated mail piece 10 to work station 14. At 52 the operator inputs selection information and display 18 displays the appropriate addressee name and associated mailing address in the manner described above. Then at 54 processor 40 selects the mail stop designation associated with the addressee name and mailing address in a manner substantially similar to that described in the above reference Hofer patent.

At 56 the operator determines if the mailing address on mail piece 10 is correct and, if it not, then at 60 determines if a return address is included on mail piece 10. If a return address is available then the operator will use scanner 31 to scan in a digital image of return address 10-RA.

Preferably the digital image is then converted into corresponding text by an optical character recognition system which may be provided either by incorporating optical character recognition capability directly into scanner 31 or by including optical character recognition subroutines in the programming of processor 40. Either of these approaches is well understood in the art and need not be discussed further here for an understanding of the subject invention.

In an alternative embodiment the digital image of return address 10-RA may simply be printed directly on the address change notice.

At 62, once the digital image is converted into corresponding text, and displayed on display 18 then, at 64 the operator determines if the displayed return address is correct. If it is not then at 68 the operator may use conventional editing techniques to correct the displayed return address.

In either case processor 40 then, at 70, creates an address change notice as will be described further below. Then at 72 the mail piece is sorted as described in the above referenced Hofer patent. Then at 76 processor 40 determines if mail piece 10 is the last mail piece and, if so, exits and, if not, returns to 50 to feed the next mail piece for processing.

Returning to 56 and 60 if mailing address 10-MA is correct, or if return address 10-RA is not present, then processor 40 goes directly to 72 to sort mail piece 10. In one embodiment of the subject invention, if return address 10-RA is not present then optional printer 26 can imprint mail piece 10 with a notation that a change of address notice should be sent by the addressee.

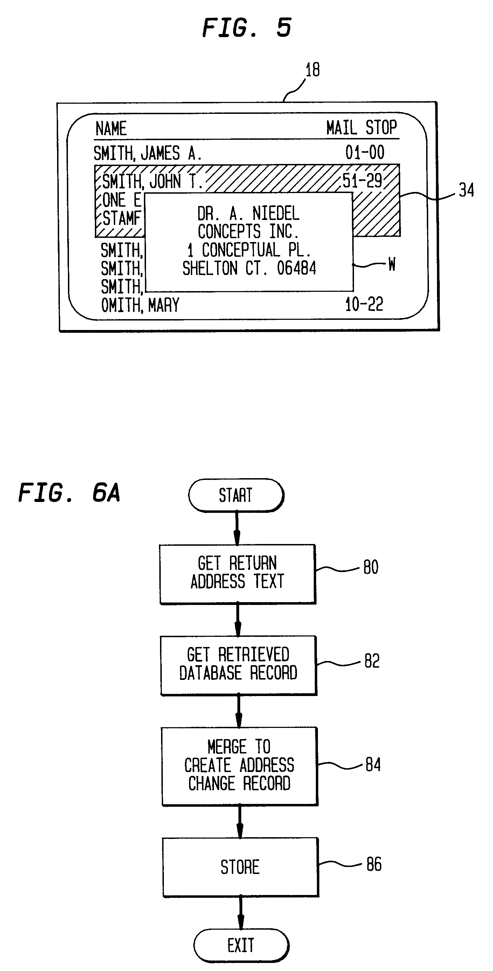

Figure 5 shows text generated from the digital image produce by scanner 31 which is displayed in a window W super imposed on display 18 to allow the operator to edit the displayed text in a conventional manner.

Figure 6A shows the operation of processor 40 in creating address change records. At 80 processor 40 gets the return address text generated from the digital image produced by scanner 31. At 82 processor 40 gets the name and associated address retrieved and identified by the operator. At 84 the text and name and address are merged to create an address change record, and at 86 the address change record is stored.

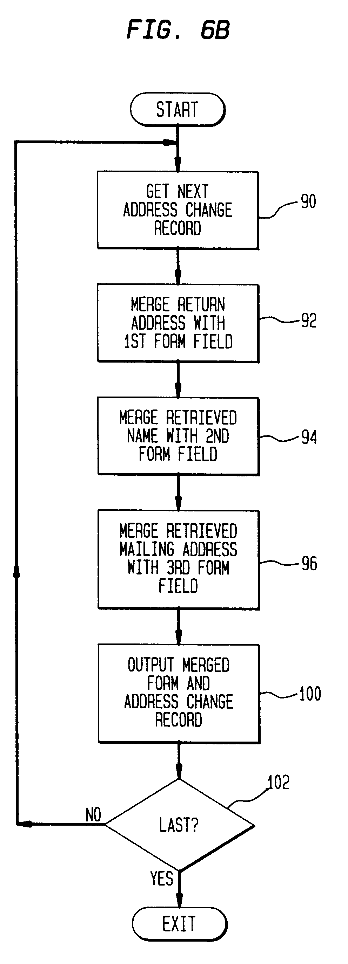

In Figure 6B processor 40, at a later selected time, processes a batch of address change records which have been stored in accordance with Figure 6a. At 90, processor 40 gets the next address change record, and at 92 merges the return address from the address record with a first field in a predetermined form. The return address may either be text as described above with respect to the preferred embodiment of the subject invention, or may simply be a digital image produced by scanner 31. At 94 the retrieved name is merged with a second field in the predetermined form, and at 96 the retrieved mailing address is merged with a third field in the predetermined form. Then at 100 the merged form and address change record are output to produce an address change notice. Then, at 102, processor 40 determines if this is the last address change record, and if not returns to 90.

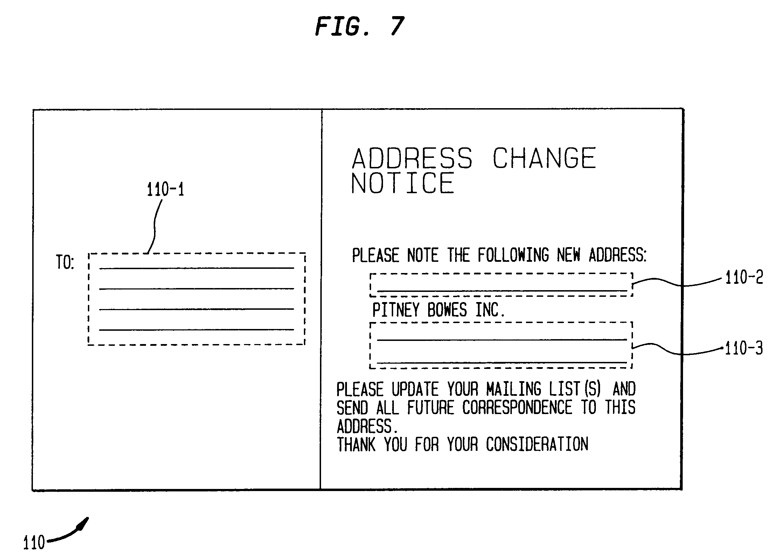

Figure 7 shows a suitable address change notice form 110 which includes a first field 110-1 for printing of the return address from the address change record as the address to which form 110 is to be delivered and second and third fields 110-2 and 110-3 for a printing of the retrieved name and associated address.

Form 110 may be stored either as full text and the merged form and address change record may be printed completely or form 110 may be pre-printed on postal cards or the like and the address change record merged simply by the addition of proper printing instructions to print the appropriate information within the various fields.

Address change notices may be produced by up loading information through link 44 to an MIS operation, or may be transmitted electronically. Other suitable methods of output of address change notices will be apparent to those skilled in the art. In a preferred embodiment the apparatus of Figures 1 and 3 may be used off-line by loading feeder 12 with postal cards preprinted with form 110 and feeding the cards through optional printer 26 which is controlled by processing 40 to print cards with address change records to produce address change notices.

While the preferred embodiments described above have all required operator intervention, fully automated systems are also within contemplation of the subject invention. For example, a high speed sorting system for use by central post offices has been marketed by the assignee of the subject invention as the OCR/CS (Optical Character Recognition/Channel Sorter). This system has a highly sophisticated optical character recognition capability and is capable of locating address fields on an envelope and converting a digital image of such fields to text without operator intervention. Those skilled in the art will recognize that such a system could, with the addition of a proper database of names and associated mailing addresses be programmed to perform substantially all the operations provided by a system operator in the preferred embodiments described above. Such systems however are very expensive and less expensive, operator assisted systems may be more cost effective for applications in corporate mail rooms as described above.

It should be noted that the subject invention can readily be applied to mail pieces such as packages. Further, if a database of addressees for outgoing mail is provided, outgoing mail can be sorted to obtain postal discounts, and internal originators notified of address changes in accordance with the subject invention.

## Claims

1. A method for generating an address change notice, comprising the steps of:
a) providing a database of names and associated mailing addresses;
b) providing information from a mail piece to access said database and retrieve one of said names and associated mailing addresses, said retrieved name corresponding to an addressee's name on said mail piece;
c) comparing a mailing address on said mail piece with said retrieved associated mailing address; and
d) if said mailing address on said mail piece is substantially different from said retrieved associated mailing address, inputting a return address from said mail piece; and then
e) creating an address change record, said address change record including said retrieved name and associated mailing address, and said return address;
f) merging said address change record with a predetermined form; and
g) outputting said merged address change record and form to generate said address change notice, said notice being addressed with said return address.

2. A method as claimed in claim 1, further comprising the step of storing said address change record as part of a batch of similar such records and wherein records in said batch are each merged with said form and output as a corresponding batch of address change notices.

3. A method as claimed in claim 1 or 2, further comprising the step of displaying said retrieved name and associated mailing address to an operator.

4. A method as described in any preceding claim, wherein said operator compares said displayed mailing address with said mailing address on said mail piece and, if said addresses are substantially different, scans said return address from said mail piece to create a digital image of said return address.

5. A method for generating an address change notice, comprising the steps of:
a) providing a database of names and associated mailing addresses;
b) providing information from a mail piece to access said database and retrieve one of said names and associated mailing addresses, said retrieved name corresponding to an addressee's name on said mail piece;
c) comparing a mailing address on said mail piece with said retrieved associated mailing address; and
d) if said mailing address on said mail piece is not the same as said retrieved associated mailing address, inputting a return address from said mail piece; and then
e) creating and outputting an address change notice, said address change record including said retrieved name and associated mailing address, and being addressed with said return address.

6. A system for generating an address change notice comprising:
a) means for storing a database of names and associated mailing addresses;
b) means for inputting information from a mail piece to access said database and retrieve one of said names and associated mailing addresses, said retrieved name corresponding to an addressee's name on said mail piece;
c) means for comparing a mailing address on said mail piece with said retrieved associated mailing address; and
d) means for inputting a return address from said mail piece; and
e) data processing means for:
e1) creating an address change record, said address change record including said retrieved name and associated mailing address, and said return address;
e2) merging said address change record with a predetermined form; and
e3) outputting said merged address change record and form to generate said address change notice, said notice being addressed with said return address.

7. A system as claimed in claim 6 further comprising means for storing said address change record as part of a batch of similar such records and wherein, in use of the system, records in said batch are each merged with said form and output as a corresponding batch of address change notices.

8. A system as claimed in claim 6 or 7, comprising a display for displaying said retrieved name and associated mailing address to an operator.

9. A system as claimed in claim 8, further comprising scanning means for scanning said return address from said mail piece such that when said operator compares said displayed mailing address with said mailing address on said mail piece and said addresses are substantially different, he can scan said return address from said mail piece to create a digital image of said return address.

10. A system for generating an address change notice comprising:
a) means (42) for storing a database of names and associated mailing addresses;
b) means (20) for inputting information from a mail piece (10) to access said database and retrieve one of said names and associated mailing addresses, said retrieved name corresponding to an addressee's name on said mail piece;
c) means (18) for comparing a mailing address on said mail piece with said retrieved associated mailing address; and
d) means (31) for inputting a return address from said mail piece if the two mailing addresses do not match, and
e) data processing means (40), responsive to the two mailing addresses not matching, for creating and outputting an address change notice including the retrieved name and associated mailing address, said notice being addressed with said return address.
